# EUROPEAN PATENT APPLICATION

(11) **EP 4 682 756 A1**
(43) Date of publication of application: **21.01.2026**
(21) Application number: 23927905.2
(22) Date of filing: 17.03.2023
(51) Int. Cl.: G06F 40/205

(54) **DATA PROCESSING METHOD AND RELATED DEVICE**

(71) Applicant: Shenzhen Yinwang Intelligent Technologies Co., Ltd., Shenzhen, Guangdong 518110 (CN)
(72) Inventor: GAO, Lutao, Shenzhen, Guangdong 518129 (CN); MA, Sha, Shenzhen, Guangdong 518129 (CN)
(74) Representative: Maiwald GmbH
(86) International application number: PCT/CN2023/082303
(87) International publication number: WO 2024/192586

(57) **Abstract**

A data processing method and a related apparatus are provided, and may be applied to the field of language processing. The method includes: obtaining a first description text in a first description language, where the first description text represents a first element of an intelligent terminal in a first scenario; obtaining a second description text in a second description language, where the second description text represents the first element, and a description name and a parameter type of the first element represented by the first description text are the same as a description name and a parameter type of the first element represented by the second description text; and executing the first description text and the second description text. According to embodiments of this application, descriptions of a description name and a parameter type of a same element described in different description languages can be the same. This can improve uniformity of description languages related to autonomous driving and help improve development efficiency.

## Description

### TECHNICAL FIELD

This application relates to the field of language processing, and in particular, to a data processing method and a related apparatus.

### BACKGROUND

With development of society, more machines, including vehicles used for mobile travel, in modern life develop toward automation and intelligence. Vehicles with intelligent driving functions (referred to as intelligent vehicles/intelligent cars) are gradually becoming part of people's daily life. In recent years, an advanced driver-assistant system (advanced driver-assistant system, ADAS) plays an important role in the intelligent vehicle. The system uses a plurality of types of detection apparatuses mounted on the vehicle to detect a surrounding environment, detect and identify an object, and performs systematic calculation and analysis on a driving environment based on data such as a map. In this way, a driving route and a driving operation can be planned, and a potential danger can be detected in advance. This effectively improves driving comfort and safety.

An intelligent driving terminal equipped with an intelligent driving system needs to pass a plurality of types of tests prior to market launch. Currently, related description languages used for the tests mainly include an operational design domain (operational design domain, ODD) description language, a static scenario description language, a dynamic scenario description language, a verification and evaluation description language, and the like. Each description language has its own system and is incompatible with each other, resulting in low design and development efficiency.

### SUMMARY

Embodiments of this application provide a data processing method and a related apparatus, which can improve uniformity of description languages related to autonomous driving and help improve development efficiency.

According to a first aspect, an embodiment of this application provides a data processing method, including:
obtaining a first description text in a first description language, where the first description text represents a first element of an intelligent terminal in a first scenario;
obtaining a second description text in a second description language, where the second description text represents the first element, and a description name and a parameter type of the first element represented by the first description text are the same as a description name and a parameter type of the first element represented by the second description text; and
executing the first description text and the second description text.

In this embodiment of this application, a same element described in different description languages may have a same description name and a same parameter type. This can improve uniformity of description languages related to autonomous driving and help improve development efficiency.

In a possible implementation, the first element belongs to a predefined first element library.

Obtaining the first description text in the first description language includes:
obtaining the first description text based on the first scenario and the first element library.

In this implementation, the first element library is an element library corresponding to the first description language, that is, an element in the first element library is an element described in the first description language. The first description text corresponding to the first element in the first scenario may be selected from the first element library based on the first scenario and in combination with the first element library.

In a possible implementation, the first element belongs to a predefined second element library.

Obtaining the second description text in the second description language includes:
obtaining the second description text based on the first scenario and the second element library.

In this implementation, the second element library is an element library corresponding to the second description language, that is, an element in the second element library is an element described in the second description language. The first description text corresponding to the first element in the first scenario may be selected from the first element library based on the first scenario and in combination with the first element library.

In a possible implementation, the description name, the parameter type, and a parameter value of the first element represented by the first description text are the same as the description name, the parameter type, and a parameter value of the first element represented by the second description text.

In this implementation, in different description languages, in addition to having a same description name and a same parameter type, a same element may also have a same parameter value.

In a possible implementation, the first description language is different from the second description language, and the first description language or the second description language includes:
an operational design domain, ODD description language, a static scenario description language, a dynamic scenario description language, or a verification and evaluation description language.

In this implementation, the first description language or the second description language may be any one of the ODD description language, the static scenario description language, the dynamic scenario description language, or the verification and evaluation description language, and the first description language is different from the second description language.

In a possible implementation, the ODD description language describes one or more of the following elements: a road-type element, an environment-type element, and a vehicle status-type element; or
the static scenario description language describes one or more of the following elements: a road-type element; or
the dynamic scenario description language describes one or more of the following elements: an environment-type element and a vehicle status-type element; or
the verification and evaluation description language describes one or more of the following elements: a road-type element, an environment-type element, and a vehicle status-type element.

In a possible implementation, the first element includes one or more elements.

In a possible implementation, the first element includes a plurality of elements, the plurality of elements are joined by a connective, and the connective includes a logical connective and/or a temporal connective.

In this implementation, when the first element includes the plurality of elements connected by the connective, descriptions of a same element in different description languages need to be the same. In addition, it needs to be ensured that a same connective is used, that is, an element combination manner is the same. This further improves uniformity of the description languages related to autonomous driving.

In a possible implementation, the logical connective includes one or more of the following:
negation, conjunction, disjunction, implication, and equivalence.

In a possible implementation, the temporal connective includes one or more of the following:
until, always, and eventually.

According to a second aspect, an embodiment of this application provides a data processing apparatus, including:
an obtaining unit, configured to obtain a first description text in a first description language, where the first description text represents a first element of an intelligent terminal in a first scenario, where
the obtaining unit is configured to obtain a second description text in a second description language, where the second description text represents the first element, and a description name and a parameter type of the first element represented by the first description text are the same as a description name and a parameter type of the first element represented by the second description text; and
a processing unit, configured to execute the first description text and the second description text.

In a possible implementation, the first element belongs to a predefined first element library.

When obtaining the first description text in the first description language, the obtaining unit is configured to:
obtain the first description text based on the first scenario and the first element library.

In a possible implementation, the first element belongs to a predefined second element library.

When obtaining the second description text in the second description language, the obtaining unit is configured to:
obtain the second description text based on the first scenario and the second element library.

In a possible implementation, the description name, the parameter type, and a parameter value of the first element represented by the first description text are the same as the description name, the parameter type, and a parameter value of the first element represented by the second description text.

In a possible implementation, the first description language is different from the second description language, and the first description language or the second description language includes:
an operational design domain, ODD description language, a static scenario description language, a dynamic scenario description language, or a verification and evaluation description language.

In a possible implementation, the ODD description language describes one or more of the following elements: a road-type element, an environment-type element, and a vehicle status-type element; or
the static scenario description language describes one or more of the following elements: a road-type element; or
the dynamic scenario description language describes one or more of the following elements: an environment-type element and a vehicle status-type element; or
the verification and evaluation description language describes one or more of the following elements: a road-type element, an environment-type element, and a vehicle status-type element.

In a possible implementation, the first element includes one or more elements.

In a possible implementation, the first element includes a plurality of elements, the plurality of elements are joined by a connective, and the connective includes a logical connective and/or a temporal connective.

In a possible implementation, the logical connective includes one or more of the following:
negation, conjunction, disjunction, implication, and equivalence.

In a possible implementation, the temporal connective includes one or more of the following:
until, always, and eventually.

According to a third aspect, an embodiment of this application provides a data processing apparatus. The data processing apparatus includes a processor and a memory. The memory stores a computer program. When the processor executes the computer program, a computing device performs the method according to any possible implementation of the first aspect.

It should be noted that the processor included in the data processing apparatus described in the third aspect may be a processor (referred to as a dedicated processor for ease of differentiation) dedicated to performing the method, or may be a processor that invokes a computer program to perform the method, for example, a general-purpose processor. Optionally, the at least one processor may further include both the dedicated processor and the general-purpose processor.

Optionally, the computer program may be stored in the memory. For example, the memory may be a non-transitory (non-transitory) memory, for example, a read-only memory (read-only memory, ROM). The memory and the processor may be integrated on a same component, or may be separately disposed on different components. A type of the memory and a manner of disposing the memory and the processor are not limited in embodiments of this application.

In a possible implementation, the at least one memory is located outside the data processing apparatus.

In another possible implementation, the at least one memory is located inside the data processing apparatus.

In this application, the processor and the memory may alternatively be integrated into one component. In other words, the processor and the memory may alternatively be integrated together.

According to a fourth aspect, an embodiment of this application provides a computer-readable storage medium. The computer-readable storage medium stores instructions. When the instructions are run on at least one processor, the method according to any possible implementation of the first aspect is implemented.

According to a fifth aspect, this application provides a computer program product. The computer program product includes computer instructions. When the instructions are run on at least one processor, the method according to any possible implementation of the first aspect is implemented.

Optionally, the computer program product may be a software installation package. If the foregoing method needs to be used, the computer program product may be downloaded and executed on a computing device.

For beneficial effect of the technical solutions provided in the second to the fifth aspects of this application, refer to beneficial effect of the technical solution in the first aspect. Details are not described herein again.

### BRIEF DESCRIPTION OF DRAWINGS

FIG. 1 is a diagram of a possible data processing method according to an embodiment of this application;
FIG. 2 is a diagram of a scenario according to an embodiment of this application;
FIG. 3 is a diagram of a structure of a data processing apparatus 30 according to an embodiment of this application; and
FIG. 4 is a diagram of a structure of another possible data processing apparatus 40 according to an embodiment of this application.

### DESCRIPTION OF EMBODIMENTS

The following describes embodiments of the present invention with reference to the accompanying drawings in embodiments of the present invention.

In this specification, claims, and accompanying drawings of this application, the terms "first", "second", "third", "fourth", and the like are used to distinguish between different objects, and are not used to describe a specific sequence. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned in this specification mean that specific features, structures, or characteristics described in combination with embodiments may be included in at least one embodiment of this application. The phrase shown in various locations in this specification may not necessarily refer to a same embodiment, and is not an independent or optional embodiment exclusive from another embodiment. It is explicitly and implicitly understood by a person skilled in the art that embodiments described in this specification may be combined with another embodiment.

Terminologies such as "component", "module", and "system" used in this specification indicate computer-related entities, hardware, firmware, combinations of hardware and software, software, or software being executed. For example, a component may be but is not limited to a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

To facilitate understanding of related content in embodiments of this application, the following describes some knowledge needed in the solutions in this application. It should be noted that these explanations are intended to make embodiments of this application easier to understand, but should not be considered as a limitation on the protection scope claimed in this application.

### 1. Operational design domain (operational design domain, ODD)

The ODD is also referred to as an operational design domain, or referred to as an operational design condition (operational design condition, ODC), and is an operational condition under which an autonomous driving system or an autonomous driving feature is designed to operate. Generally, the ODD is an operational condition of an autonomous driving function. For example, the operational design condition may include but is not limited to an environment, a geographical location, a time limit, a traffic and road feature, a vehicle status, and a driver status.

### 2. Intelligent terminal

The intelligent terminal in embodiments of this application is an apparatus having a behavior capability. For example, the intelligent terminal may be a power-driven apparatus that can move, for example, a transport apparatus or a transportation means such as a vehicle, an uncrewed aerial vehicle, or a wheeled mobile robot.

### 3. Logical operator

The logical operator is also referred to as a logical connective, or a logical conjunction, and may join a plurality of elements. With reference to Table 1, logical operators include but are not limited to operators shown in Table 1.

**Table 1**

| **Logical conjunction** | **Meaning** |
|---|---|
| ¬ | Negation (not) |
| ∧ | Conjunction (and) |
| ∨ | Disjunction (or) |
| → | Implication (implication) |
| ↔ | Equivalence (equivalence) |

### 4. Temporal operator

The temporal operator is also referred to as a temporal connective, or a temporal conjunction. The temporal operator is an operator representing events in terms of time. In a possible example, temporal operators include but are not limited to operators shown in Table 2.

**Table 2**

| **Temporal conjunction** | **Meaning** |
|---|---|
| *X* | Next moment (next) |
| U | Until (until) |
| G | Always (always, global) |
| F | Eventually (eventually, future) |
| *G*_{(*t*₁,*t*₂)} | Always happening from *t*₁ to *t*₂ |
| *F*_{(*t*₁,*t*₂)} | Happening from *t*₁ to *t*₂ |

### 5. Natural language description text

The natural language description text is a text in a natural language form, and the text herein includes but is not limited to a character string, a formula, a paragraph, a complete document, or the like.

### 6. Proposition

The proposition means semantics of a narrative sentence, and may be judged as true or false. For example, a current speed of a vehicle A meets a speed limit requirement. For a proposition: "A current speed of the vehicle A is greater than a maximum speed limit", a true value of the proposition is false. For a proposition: "A current speed of the vehicle A is less than a maximum speed limit", a true value of the proposition is true.

The proposition can include an atomic proposition and a compound proposition. The atomic proposition is a proposition that cannot be further divided. The compound proposition is a proposition that is formed by joining atomic propositions through a connective.

The foregoing example descriptions of concepts may be applied in the following.

Currently, related description languages used for tests mainly include an operational design domain (operational design domain, ODD) description language, a static scenario description language, a dynamic scenario description language, a verification and evaluation description language, and the like. Each description language has its own system and is incompatible with each other, resulting in low design and development efficiency.

In view of this, embodiments of this application provide a description language, a data processing method, and a related apparatus. It is designed that a same element described in different description languages has a same description name and a same parameter type. This can improve uniformity of description languages related to autonomous driving, and a developer more easily reads and understands a related description text, which helps improve development efficiency.

The following first describes an element library of a description language in this application.

This embodiment of this application provides a language used to describe an element in the element library. When the language is used to describe elements in different element libraries, a same element in the different element libraries may be represented by a same description name and a same parameter type.

For example, the language may be used to describe an element in an ODD element library. For example, an example of describing an element "environment" is used. A language text may be in a form of environment(parameter 1, parameter 2), where a description name is environment, a parameter type is defined by the parameter 1, and a parameter value is defined by the parameter 2. For example, the parameter 1 may be 'weather' or 'envIlluminance', which respectively represents a weather environment or an illumination environment. When the parameter 1 is 'weather', it indicates the weather environment. In this case, a value of the parameter 2 may be 'clear', 'fog', 'rain', 'snow', or the like, which respectively represents clear weather, foggy weather, rainy weather, snowy weather, or the like.

Optionally, the example of describing the element "environment" is also used. Another understanding of the environment(parameter 1, parameter 2) is as follows: environment represents the description name, and both the parameter 1 and the parameter 2 represent the parameter type. Herein, the parameter type is an enumerated type, and the parameter value is an enumerated value. For example, a type of the parameter 1 is the enumerated type, and the parameter 1 represents an environment type. The enumerated value includes 'weather', 'envIlluminance', or the like, which respectively represents a weather environment, an illumination environment, or the like. A type of the parameter 2 is the enumerated type, and the parameter 2 represents a specific type of the parameter 1. When the parameter 1 is 'weather', it indicates the weather environment. In this case, an enumerated value of the parameter 2 may be 'clear', 'fog', 'rain', 'snow', or the like, which respectively represents clear weather, foggy weather, rainy weather, snowy weather, or the like.

For another example, an example of describing an element "road" is used. A language text may be in a form of road('parameter 1', 'parameter 2'), where the description name is road, the parameter type is defined by the parameter 1, and the parameter value is defined by the parameter 2. For example, the parameter 1 may be 'roadType', 'laneld', 'laneNum', 'laneType', or the like, which respectively represents a road type, a road identifier, a quantity of lanes, a lane type, or the like. When the parameter 1 is 'roadType', which represents the road type, a value of the parameter 2 may be 'highway', 'expressway', or the like, which respectively represents a highway, an expressway, or the like.

Optionally, a description name and a parameter type of a road-type element in an ODD description language are the same as a description name and a parameter type of the road-type element in a dynamic scenario description language and a verification and evaluation description language. In addition, description names and parameter types of an environment-type element and a vehicle status-type element in the ODD description language may be the same as description names and parameter types of the environment-type element and the vehicle status-type element in the static scenario description language and the verification and evaluation description language. In other words, a same element in different description languages may have a same description name and a same parameter type. Optionally, the same element may also have a same parameter value.

The following describes in detail a data processing method and a related apparatus provided in this application with reference to the accompanying drawings. It should be noted that service scenarios described in this application are intended to describe the technical solutions in this application more clearly, and do not constitute a limitation on the technical solutions provided in this application. It should be understood that, with evolution of a system architecture and emergence of a new service scenario, the technical solutions provided in this application are also applicable to similar technical problems.

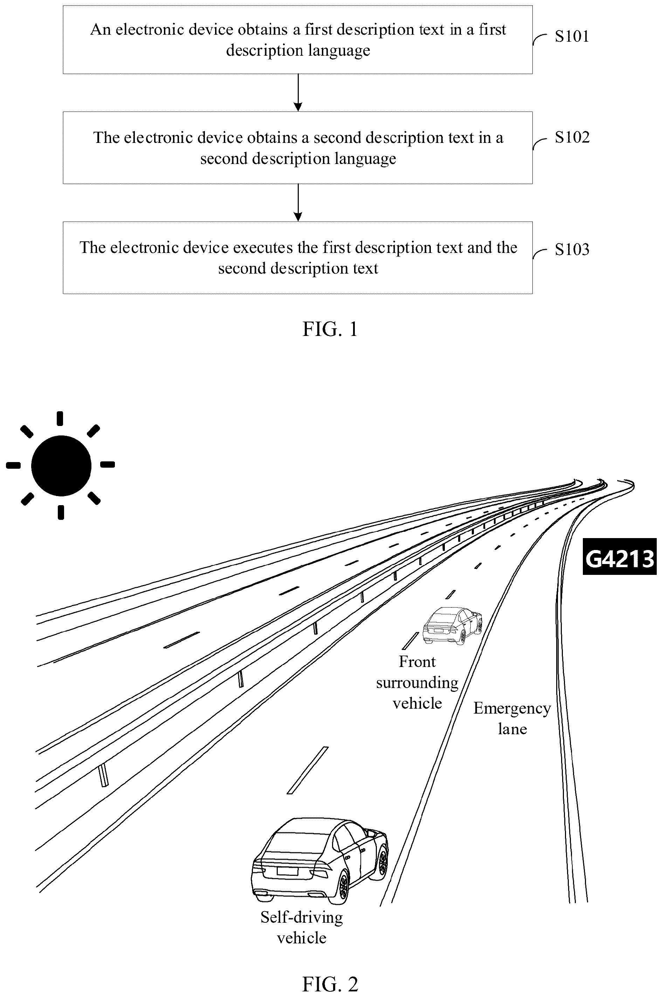

FIG. 1 is a diagram of a possible data processing method according to an embodiment of this application. As shown in FIG. 1, the data processing method includes the following steps S101 to S103. The method shown in FIG. 1 may be executed by any electronic device or platform that has a data processing capability, for example, may be a server, a computer device, a cloud platform, or a chip in the electronic device. This is not limited herein. FIG. 1 is mainly described by using an example in which the electronic device executes the method. It should be noted that FIG. 1 is a schematic flowchart of a method embodiment of this application, and shows detailed communication steps or operations of the method. However, these steps or operations are merely examples. Variants of various operations in FIG. 1 or other operations may be further performed in embodiments of this application. In addition, the steps in FIG. 1 may be separately performed in a sequence different from that shown in FIG. 1, and possibly, not all the operations in FIG. 1 need to be performed.

S101: The electronic device obtains a first description text in a first description language.

In some feasible implementations, the first description text represents a first element of an intelligent terminal in a first scenario. Herein, the first scenario may be understood as a scenario in which a simulation test is performed on the intelligent terminal and that is described in a plurality of elements. For example, the first scenario may include a description of an environment, and the environment may be a weather environment, an illumination environment, a geographical environment, or the like. For another example, the first scenario may further include a description of a vehicle status. For example, the vehicle status may be a vehicle speed. This is not limited herein.

The first element belongs to a predefined first element library. It should be understood that an element included in the first element library is an element described in the first description language. The first description language may be any one of an ODD description language, a static scenario description language, a dynamic scenario description language, or a verification and evaluation description language. It should be noted that each element in the first element library may be presented in a form of a table, a set, a matrix, or the like. This is not limited in this application. Optionally, the first element library may include all elements in elements that can be described in the first description language, or the first element library may include some elements in elements that can be described in the first description language. This is not limited herein.

For example, obtaining the first description text in the first description language may be understood as obtaining the first description text based on the first scenario and the first element library. For example, the first description text may be a character string, code, or the like. This is not limited herein. Optionally, obtaining the first description text in the first description language may also be understood as receiving the first description text in the first description language.

It should be understood that the element included in the first element library in this embodiment of this application may be one or more of a road-type element, an environment-type element, a vehicle status-type element, or the like. This is not limited herein. For example, if it is assumed that the first element library is an element library corresponding to the ODD description language (that is, an ODD element library), the first element library may include one or more of the road-type element, the environment-type element, the vehicle status-type element, or the like. For another example, if it is assumed that the first element library is an element library corresponding to the static scenario description language (that is, a static scenario element library), it is assumed that the first element library may include the road-type element. For another example, if it is assumed that the first element library is an element library corresponding to the dynamic scenario description language (that is, a dynamic scenario element library), the first element library may include one or more of the environment-type element, a vehicle status-type element, or the like. If it is assumed that the first element library is an element library corresponding to the verification and evaluation description language (that is, a verification and evaluation element library), the first element library may include one or more of the road-type element, the environment-type element, the vehicle status-type element, or the like.

For example, the road-type element may include a road type (roadType), a road identifier (laneId), a quantity of lanes (laneNum), a lane type (laneType), and the like. For example, the road type may be an urban road, a road, a factory road, a forest road, and a rural road. The urban road is further classified into four levels: an expressway (expressway), an arterial road (arterial road), a collector road (collector road), and an access road (access road). The road is further classified into five levels: a highway (highway), a level-1 road, a level-2 road, a level-3 road, and a level-4 road. The lane type may include a driving (driving) lane, an emergency (emergency) lane, and a bus lane. The environment-type element may include, for example, a weather environment (weather), an illumination environment (envIlluminance), a temperature environment (temperature), and the like. For example, the weather environment may be clear (clear) weather, foggy (fog) weather, rainy (rain) weather, snowy (snow) weather, or the like, and the illumination environment may be low (low) illumination or high (high) illumination. The vehicle status-type element may include, for example, a vehicle speed (speed), a time gap (time distance) from a front vehicle, and an autonomous driving function. For example, the vehicle speed may include a vehicle speed of an ego (ego) vehicle and a vehicle speed of a front (fo) vehicle, and the autonomous driving function may include lane keeping (keepLane) and the like. This is not limited in this application.

S102: The electronic device obtains a second description text in a second description language.

In some feasible implementations, the second description text represents the first element, and the first element belongs to a predefined second element library. It should be understood that an element included in the second element library is an element described in the second description language. The second description language may be any one of the ODD description language, the static scenario description language, the dynamic scenario description language, or the verification and evaluation description language, and the second description language is different from the first description language. It should be noted that each element in the second element library may be presented in a form of a table, a set, a matrix, the like. This is not limited in this application. Optionally, the second element library may include all elements in elements that can be described in the first description language, or the second element library may include some elements in elements that can be described in the first description language. This is not limited herein.

For example, obtaining the second description text in the second description language may be understood as obtaining the second description text based on the first scenario and the second element library. It should be understood that the element included in the second element library in this application may also be one or more of the road-type element, the environment-type element, the vehicle status-type element, or the like. This is not limited herein. For understanding of various types of elements, refer to related descriptions in step S101. Details are not described herein again. Optionally, obtaining the second description text in the second description language may also be understood as receiving the second description text in the second description language.

It should be noted that in this application, a description name and a parameter type of the first element represented by the first description text are the same as a description name and a parameter type of the first element represented by the second description text. Optionally, the description name, the parameter type, and a parameter value of the first element represented by the first description text are the same as the description name, the parameter type, and a parameter value of the first element represented by the second description text. For example, the ODD description language, the dynamic scenario description language, and the verification and evaluation description language all have descriptions of an environment. For example, environment() represents the environment in the descriptions in the three languages, and environment() may have two parameters, which are denoted as environment(parameter 1, parameter 2). When the parameter 1 is 'weather', it indicates the weather environment. In this case, a value of the parameter 2 may be 'clear', 'fog', 'rain', 'snow', or the like, which respectively represents clear weather, foggy weather, rainy weather, snowy weather, or the like. environment('weather', 'clear') in the ODD element library represents that an ODD of a self-driving vehicle is clear weather, environment('weather', 'clear') in the dynamic scenario element library represents that weather in a test scenario is clear weather, and environment('weather', 'clear') in the verification and evaluation element library represents whether the weather is clear weather.

For example, the first scenario shown in FIG. 2 is used as an example. It is assumed that a natural language description text of the first scenario is as follows: "A self-driving vehicle runs in clear weather, a road type is a highway, a road identifier is 4213, a quantity of lanes is six, including four driving lanes and two emergency lanes, a vehicle speed is from 0 km/h to 60 km/h, an autonomous driving function is lane keeping, a vehicle speed of a front surrounding vehicle of the self-driving vehicle is from 0 km/h to 60 km/h, a time gap between the self-driving vehicle and the front surrounding vehicle is 4s, and behavior of the front surrounding vehicle is lane keeping".

In an implementation, if the first scenario is described in the ODD description language, the elements in the ODD element library may be described as those in Table 3, and may include one or more of the environment-type element, the road-type element, the vehicle status-type element, or the like. environment('weather', 'clear') represents that a weather condition in an ODD of a self-driving vehicle is clear weather; road('roadType'; 'highway') represents that a road type in the ODD of the self-driving vehicle is a highway; speed(ego, 'belong_to', [0, 60]) represents that a vehicle speed in the ODD of the self-driving vehicle is from 0 km/h to 60 km/h; and keepLane(ego) represents that an autonomous driving function in the ODD of the self-driving vehicle is lane keeping.

**Table 3**

| ODD description language | |
|---|---|
| Environment type | environment('weather', 'clear') |
| Road type | road('roadType', 'highway') |
| Vehicle status type | speed(ego, 'belong_to', [0, 60]) |
| | keepLane(ego) |

Optionally, if the first scenario is described in the static scenario description language, the elements in the static scenario element library may be described as those in Table 4, and specifically include the road-type element. road('roadType', 'highway') represents that a test scenario of a self-driving vehicle is a highway; road('laneId', 4213) represents that a road identifier in the test scenario is 4213; road('laneNum', 6) represents that a quantity of lanes in the test scenario is six; and lane('laneType', ['driving', 4, 'emergency', 2]) represents that the test scenario includes four driving lanes and two emergency lanes. A description of road('roadType', 'highway') in the static scenario description language is consistent with a description of the road type in the ODD description language, including a same description name, a same parameter type, and a same parameter value of the element.

**Table 4**

| Static scenario description language | |
|---|---|
| Road type | road('roadType', 'highway') |
| | road('laneId', 4213) |
| | road('laneNum', 6) |
| | lane('laneType', ['driving', 4, 'emergency', 2]) |

Optionally, if the first scenario is described in the dynamic scenario description language, the elements in the dynamic scenario element library may be described as those in Table 5, and specifically include the environment-type element and the vehicle status-type element. environment('weather', 'clear') represents that a test scenario is clear weather; speed(ego, 'belong_to', [0, 60]) represents that a vehicle speed of a self-driving vehicle in the test scenario is from 0 km/h to 60 km/h; speed(fo, 'belong_to', [0, 60]) represents that a vehicle speed of a front surrounding vehicle of the self-driving vehicle in the test scenario is from 0 km/h to 60 km/h; distance(ego, fo, 'thw', 'equal_to', 4) represents that a time gap between the self-driving vehicle and the front surrounding vehicle in the test scenario is 4s; keepLane(ego) represents that behavior of the self-driving vehicle in the test scenario is lane keeping; and keepLane(fo) represents that behavior of the front surrounding vehicle in the test scenario is lane keeping. Descriptions of environment('weather', 'clear'), speed(ego, 'belong_to', [0, 60]), and keepLane(ego) in the dynamic scenario description language are respectively consistent with descriptions of the environment type, the vehicle speed of the self-driving vehicle, and the autonomous driving function of the self-driving vehicle in the ODD description language, including same description names, same parameter types, and same parameter values of the elements.

**Table 5**

| Dynamic scenario description language | |
|---|---|
| Environment type | environment('weather', 'clear') |
| Vehicle status type | speed(ego, 'belong_to', [0, 60]) |
| | speed(fo, 'belong_to', [0, 60]) |
| | distance(ego, fo, 'thw', 'equal_to', 4) |
| | keepLane(ego) |
| | keepLane(fo) |

Optionally, if the first scenario is described in the verification and evaluation description language, the elements in the verification and evaluation element library may be described as those in Table 6. In the verification and evaluation description language, follow(ego, fo) represents that a self-driving vehicle follows a front surrounding vehicle; collision(ego, fo) represents that the self-driving vehicle collides with the front surrounding vehicle; and keepLane(ego) & follow(ego, fo) → ¬collision(ego, fo) represents that when the self-driving vehicle is in a lane keeping state and follows the front surrounding vehicle, the self-driving vehicle cannot collide with the front surrounding vehicle. It can be learned from Table 6 that the description of keepLane(ego) is consistent with the description that the autonomous driving function of the self-driving vehicle is lane keeping in the ODD description language and the dynamic scenario description language, including a same description name, a same parameter type, and a same parameter value of the element. road('roadType', 'highway') & environment('weather', 'clear') & speed(ego, 'belong_to', [0, 60]) → distance(ego, fo, 'thw', 'greater_than', 4) represents that when a current road type of the self-driving vehicle is a highway, an environment condition of the self-driving vehicle is clear weather, and a vehicle speed of an ego vehicle is from 0 km/h to 60 km/h, the ego vehicle needs to keep a time gap of more than 4s from the front surrounding vehicle. Similarly, descriptions of road('roadType', 'highway'), environment('weather', 'clear'), and speed(ego, 'belong_to', [0, 60]) in the verification and evaluation description language are consistent with descriptions of the road type, the environment type, and the vehicle speed of the self-driving vehicle in the ODD description language, including same description names, same parameter types, and same parameter values of the elements. Optionally, a description of road('roadType', 'highway') in the verification and evaluation description language is further consistent with a description of the road type in the static scenario description language, and descriptions of environment('weather', 'clear') and speed(ego, 'belong_to', [0, 60]) are further consistent with descriptions of the environment type and the vehicle speed of the self-driving vehicle in the dynamic scenario description language.

It should be noted that the element in the verification and evaluation description language may further have a proposition attribute, that is, "True" or "False" may be output. It is assumed that the element in the verification and evaluation element library is road('roadType', 'highway'). When the self-driving vehicle is currently on a highway, "True" is output. When the self-driving vehicle is on an expressway, "False" is output. In this way, whether the self-driving vehicle meets a rule in verification and evaluation can be determined.

**Table 6**

| Verification and evaluation description language | |
|---|---|
| Security type | keepLane(ego) & follow(ego, fo) → ¬collision(ego, fo) |
| Compliance type | road('roadType', 'highway') & environment('weather', 'clear') & speed(ego, 'belong_to', [0, 60]) → distance(ego, fo, 'thw', 'greater_than', 4) |

It should be understood that the first element may be a single element. For example, environment('weather', 'clear') in the ODD description language may represent that a weather condition constrained in the ODD of the self-driving vehicle is clear weather, that is, a description of the single-element. For another example, in the ODD description language, road('roadType', 'highway') may represent that a road condition constrained in the ODD of the self-driving vehicle is a highway, which is also the description of the single element.

Optionally, the first element may be a plurality of elements. When the first element is the plurality of elements, the plurality of elements may be joined by using a connective. Herein, the connective may include a logical connective and/or a temporal connective. For example, G(environment('weather', 'clear') ∧ (¬environment('envIlluminance', 'low'))) includes a plurality of elements and connectives, and represents that a weather condition in the ODD of the self-driving vehicle is clear weather, and an illumination condition cannot be low illumination, and G represents that the clear weather always needs to be met and the illumination condition cannot be low illumination.

For example, it is assumed that a natural language description text of the first scenario is as follows: "A self-driving vehicle runs in clear weather, an illumination condition cannot be low illumination, a road type is a highway or an expressway, a road identifier is 4213, a quantity of lanes is six, including four driving lanes and two emergency lanes, a vehicle speed of the self-driving vehicle is from 0 km/h to 60 km/h, and a vehicle speed of a front surrounding vehicle of the self-driving vehicle is from 0 km/h to 60 km/h, a time gap between the self-driving vehicle and the front surrounding vehicle is 4s, and a lane holding function can be enabled for an ego vehicle only when there is a surrounding vehicle that is in a same lane as the self-driving vehicle and that is in front of the self-driving vehicle".

In an implementation, if the first scenario is described in the ODD description language, the elements in the ODD element library may be described as those in Table 7, and may include the environment-type element, the road-type element, the vehicle status-type element, or the like. G(environment('weather', 'clear') ∧ (¬environment('envIlluminance', 'low'))) represents that a weather condition in the ODD of the self-driving vehicle is always clear weather, and an illumination condition cannot always be low illumination; road('roadType', 'highway') V road('roadType', 'expressway') represents that a road type in the ODD of the self-driving vehicle is a highway or an expressway; speed(ego, 'belong_to', [0, 60]) represents that a vehicle speed in the ODD of the self-driving vehicle is from 0 km/h to 60 km/h; and position(fo, ego, 'lane-sameLane') ∧ position(fo, ego, 'direction-front') → keepLane(ego) represents that the ODD of the self-driving vehicle is that a lane keeping function can be enabled for an ego vehicle only when there is a surrounding vehicle is in a same lane as the self-driving vehicle and that is in front of the self-driving vehicle.

**Table 7**

| ODD description language | |
|---|---|
| Environment type | G(environment('weather', 'clear') ∧ (¬environment('envIlluminance', 'low'))) |
| Road type | road('roadType', 'highway') V road('roadType', 'expressway') |
| Vehicle status type | speed(ego, 'belong_to', [0, 60]) |
| | position(fo, ego, 'lane-sameLane') ∧ position(fo, ego, 'direction-front') → keepLane(ego) |

Optionally, if the first scenario is described in the static scenario description language, the elements in the static scenario element library may be described as those in Table 8, and specifically include the road-type element. road('roadType', 'highway') V road('roadType', 'expressway') represents that a test scenario of a self-driving vehicle is a highway or an expressway; road('laneId', 4213) represents that a road identifier in the test scenario is 4213; road('laneNum', 6) represents that a quantity of lanes in the test scenario is six; and lane('laneType', ['driving', 4, 'emergency', 2]) represents that the test scenario includes four driving lanes and two emergency lanes. A description of road('roadType', 'highway') V road('roadType', 'expressway') in the static scenario description language is consistent with a description of the road type in the ODD description language, including a same description name, a same parameter type, and a same parameter value of the element, and a same combination manner (or referred to as a joining manner or a connection manner) of the elements.

**Table 8**

| Static scenario description language | |
|---|---|
| Road type | road('roadType', 'highway') V road('roadType', 'expressway') |
| | road('laneId', 4213) |
| | road('laneNum', 6) |
| | lane('laneType', ['driving', 4, 'emergency', 2]) |

Optionally, if the first scenario is described in the dynamic scenario description language, the elements in the dynamic scenario element library may be described as those in Table 9, and specifically include the environment-type element and vehicle status-type element. G(environment('weather', 'clear') ∧ (¬environment('envIlluminance', 'low'))) represents that a weather condition of a test scenario is clear weather, and an illumination condition cannot always be low illumination; speed(ego, 'belong_to', [0, 60]) represents that a vehicle speed of a self-driving vehicle in the test scenario is from 0 km/h to 60 km/h; speed(fo, 'belong_to', [0, 60]) represents that a vehicle speed of a front surrounding vehicle of the self-driving vehicle in the test scenario is from 0 km/h to 60 km/h; distance(ego, fo, 'thw', 'equal_to', 4) represents that a time gap between the self-driving vehicle and the front surrounding vehicle in the test scenario is 4s; position(fo, ego, 'lane-sameLane') ∧ position(fo, ego, 'direction-front') represents that the surrounding vehicle in the test scenario is in a same lane as the self-driving vehicle and is in front of the self-driving vehicle; keepLane(ego) represents that behavior of the self-driving vehicle is lane keeping; and keepLane(fo) represents that behavior of the front surrounding vehicle of the self-driving vehicle is lane keeping. Descriptions of the environment type (that is, G(environment('weather', 'clear') ∧ (¬environment('envIlluminance', 'low')))) and a surrounding vehicle location (that is, position(fo, ego, 'lane-sameLane') ∧ position(fo, ego, 'direction-front')) in the dynamic scenario description language are consistent with descriptions of the environment type and a surrounding vehicle location in the ODD description language, including same description names, same parameter types, and same parameter values of the elements, and same combination manner (or referred to as a joining manner or a connection manner) of the elements. Optionally, descriptions of the vehicle speed of the self-driving vehicle and the autonomous driving function of the self-driving vehicle in the dynamic scenario description language are consistent with descriptions of the vehicle speed of the self-driving vehicle and the autonomous driving function of the self-driving vehicle in the ODD description language.

**Table 9**

| Dynamic scenario description language | |
|---|---|
| Environment type | G(environment('weather', 'clear') ∧ (¬environment('envIlluminance', 'low'))) |
| Vehicle status type | speed(ego, 'belong_to', [0, 60]) |
| | speed(fo, 'belong_to', [0, 60]) |
| | distance(ego, fo, 'thw', 'equal_to', 4) |
| | position(fo, ego, 'lane-sameLane') ∧ position(fo, ego, 'direction-front') |
| | keepLane(ego) |
| | keepLane(fo) |

Optionally, if the first scenario is described in the verification and evaluation description language, the elements in the verification and evaluation element library may be described as those in Table 10. In the verification and evaluation description language, ads('allowed2start') represents that an autonomous driving system (autonomous driving system, ADS) is allowed to be activated. G((road('roadType', 'highway') V road('roadType', 'expressway')) ∧ environment('weather', 'clear') ∧ (¬environment('envIlluminance', 'low')) → ads('allowed2start')) represents that when the road type is a highway or an expressway, the weather condition is clear weather, and the illumination condition is not low, the ADS needs to be allowed to be activated. road('roadType', 'highway') V road('roadType', 'expressway') is the same as a road description statement in the ODD description language and the static scenario description language, including a same language element, and a same combination method. environment('weather', 'clear') ∧ (¬environment('envIlluminance', 'low')) is the same as an environment description statement in the ODD description language and the dynamic scenario description language, including a same language element and a same combination method.

For example, ads('stateOpen') represents that the ADS currently is activated, and ads('request2takeOver') represents that the ADS requests to take over the vehicle. F_{[0, 10]} represents that an event will occur in next 10s. ads('stateOpen') ∧ road('roadType', 'highway') ∧ F_{[0, 10]}(¬road('roadType', 'highway')) → ads('request2takeOver') represents that the ADS currently is in an activated state, a current road is a highway, and the self-driving vehicle in next 10s will not be on the highway, and the ADS need request to take over the vehicle. A description of road('roadType', 'highway') is consistent with a road description in the ODD description language and the static scenario description language.

**Table 10**

| Verification and evaluation description language | |
|---|---|
| Function type | G((road('roadType', 'highway') V road('roadType', 'expressway')) ∧ environment('weather', 'clear') ∧ (¬environment('envIlluminance', 'low')) → ads ('allowed2start')) |
| | ads('stateOpen') ∧ road('roadType', 'highway') ∧ F_{[0, 10]} (¬road('roadType', 'highway')) → ads('request2takeOver') |

S103: The electronic device executes the first description text and the second description text.

Optionally, the electronic device executes the first description text and the second description text, so that the intelligent terminal can be tested in the first scenario. It should be noted that regardless of forms of the first description text and the second description text, for example, source code or an intermediate document, a test performed on the intelligent terminal by using the first description text and the second description text may be understood as executing the first description text and the second description text.

In this embodiment of this application, a same element described in different description languages has a same description name and a same parameter type. This can improve uniformity of description languages related to autonomous driving, and a developer more easily reads and understands a related description text, which helps improve development efficiency.

The foregoing describes in detail the method in embodiments of this application. The following provides apparatuses in embodiments of this application.

It may be understood that, to implement the functions in the foregoing embodiments of the method, a plurality of apparatuses provided in this embodiment of this application, for example, a data processing apparatus, include a corresponding hardware structure, software unit, or a combination of a hardware structure and a software structure for performing the functions. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may implement the foregoing method embodiments by using different apparatus implementations in different use scenarios. It should not be considered that different implementations of the apparatus go beyond the scope of embodiments of this application.

In embodiments of this application, the apparatus (for example, the data processing apparatus) may be divided into functional units. For example, the functional units may be obtained through division based on corresponding functions, or two or more functions may be integrated into one functional unit. The integrated module may be implemented in a form of hardware, or may be implemented in a form of a software functional unit. It should be noted that, in this embodiment of this application, division into the units is an example, and is merely a logical function division. During actual implementation, another division manner may be used.

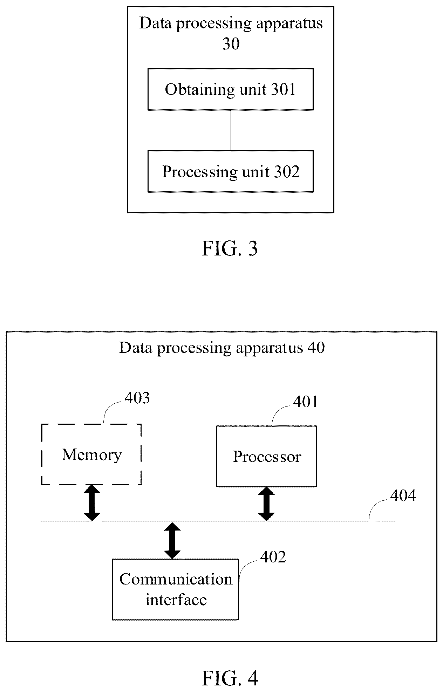

FIG. 3 is a diagram of a structure of a data processing apparatus 30 according to an embodiment of this application. Optionally, the data processing apparatus 30 may be an independent device, or may be a component included in an independent device, for example, a chip, a software module, or an integrated circuit. The data processing apparatus 30 is configured to implement the foregoing data processing method, for example, configured to implement the method of the electronic device in the embodiment in FIG. 1.

In a possible implementation, the data processing apparatus 30 may include an obtaining unit 301 and a processing unit 302. The obtaining unit 301 may be configured to implement a function of obtaining, receiving, or generating the first description text and the second description text, for example, S101 or S102, and/or configured to support another process of the technology described in the foregoing method. In some possible implementation scenarios, the obtaining unit 301 may alternatively be replaced with a communication interface module and/or a transceiver module, and the interface module and/or the transceiver module may be configured to support the another process of the technology described in the foregoing method.

The processing unit 302 may be configured to perform the foregoing operations like executing the first description text and the second description text and the like, for example, S103, and/or configured to support the another process of the technology described in this specification.

In a possible design, the obtaining unit 301 is configured to obtain a first description text in a first description language, where the first description text represents a first element of an intelligent terminal in a first scenario.

The obtaining unit 301 is configured to obtain a second description text in a second description language, where the second description text represents the first element, and a description name and a parameter type of the first element represented by the first description text are the same as a description name and a parameter type of the first element represented by the second description text.

The processing unit 302 is configured to execute the first description text and the second description text.

In a possible implementation, the first element belongs to a predefined first element library.

When obtaining the first description text in the first description language, the obtaining unit 301 is configured to:
obtain the first description text based on the first scenario and the first element library.

In a possible implementation, the first element belongs to a predefined second element library.

When obtaining the second description text in the second description language, the obtaining unit 301 is configured to:
obtain the second description text based on the first scenario and the second element library.

In a possible implementation, the description name, the parameter type, and a parameter value of the first element represented by the first description text are the same as the description name, the parameter type, and a parameter value of the first element represented by the second description text.

In a possible implementation, the first description language is different from the second description language, and the first description language or the second description language includes:
an operational design domain, ODD description language, a static scenario description language, a dynamic scenario description language, or a verification and evaluation description language.

In a possible implementation, the ODD description language describes one or more of the following elements: a road-type element, an environment-type element, and a vehicle status-type element; or
the static scenario description language describes one or more of the following elements: a road-type element; or
the dynamic scenario description language describes one or more of the following elements: an environment-type element and a vehicle status-type element; or
the verification and evaluation description language describes one or more of the following elements: a road-type element, an environment-type element, and a vehicle status-type element.

In a possible implementation, the first element includes one or more elements.

In a possible implementation, the first element includes a plurality of elements, the plurality of elements are joined by a connective, and the connective includes a logical connective and/or a temporal connective.

In a possible implementation, the logical connective includes one or more of the following:
negation, conjunction, disjunction, implication, and equivalence.

In a possible implementation, the temporal connective includes one or more of the following:
until, always, and eventually.

FIG. 4 is a diagram of a structure of another possible data processing apparatus 40 according to an embodiment of this application.

The data processing apparatus 40 may be an independent device such as a vehicle, an uncrewed aerial vehicle, or a robot, or may be a component such as a chip, a software module, or an integrated circuit, included in an independent device. The data processing apparatus 40 may include at least one processor 401 and a communication interface 402. Optionally, at least one memory 403 may be further included. Further, optionally, a connection line 404 may be further included. The processor 401, the communication interface 402, and/or the memory 403 are connected through the connection line 404, and communicate with each other through the connection line 404 to transfer a control signal and/or a data signal.
(1) The processor 401 is a module for performing an arithmetic operation and/or a logical operation, and may specifically include one or more of the following apparatuses: a CPU, an MCU, an AP, a TDC, a filter, a GPU, an MPU, an ASIC, an ISP, a DSP, an FPGA, a CPLD, a coprocessor (assisting the central processing unit in completing corresponding processing and application), an NPU, and/or the like.
(2) The communication interface 402 may be configured to provide an information input or output for the at least one processor. In some possible scenarios, the communication interface 402 may include an interface circuit, and/or the communication interface 402 may be configured to receive data sent from the outside and/or send data to the outside. For example, the communication interface 402 may be a wired link interface including an Ethernet cable and the like, or may be a wireless link (Wi-Fi, Bluetooth, universal wireless transmission, a vehicle-mounted short-range communication technology, another short-distance wireless communication technology, or the like) interface. Optionally, the communication interface 402 may further include a transmitter (for example, a radio frequency transmitter or an antenna), a receiver, or the like coupled to the interface.

Optionally, if the data processing apparatus 40 is an independent device, the communication interface 402 may include a receiver and a transmitter. The receiver and the transmitter may be a same component or different components. When the receiver and the transmitter are a same component, the component may be referred to as a transceiver.

Optionally, if the data processing apparatus 40 is a chip or a circuit, the communication interface 402 may include an input interface and an output interface, and the input interface and the output interface may be a same interface or different interfaces.

Optionally, a function of the communication interface 402 may be implemented through a transceiver circuit or a dedicated transceiver chip. The processor 401 may be implemented by a dedicated processing chip, a processing circuit, a processor, or a general-purpose chip.

(3) The memory 403 is configured to provide storage space, and the storage space may store data such as an operating system and a computer program. The memory 403 may be one or a combination of a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), and the like.

Functions and actions of modules or units in the data processing apparatus 40 listed above are merely examples for description.

Functional units in the data processing apparatus 40 may be configured to implement the foregoing data processing method, for example, the method described in the embodiment shown in FIG. 1. Herein, detailed descriptions are omitted to avoid repetition.

Optionally, the processor 401 may be a processor (referred to as a dedicated processor for ease of differentiation) that is specially configured to perform the foregoing method, or may be a processor (referred to as a dedicated processor for ease of differentiation) that invokes a computer program to perform the foregoing method. Optionally, the at least one processor may further include both a dedicated processor and a general-purpose processor.

Optionally, when the computing device includes the at least one memory 403, if the processor 401 invokes a computer program to implement the foregoing method, the computer program may be stored in the memory 403.

In a possible design, the data processing apparatus 40 is configured to implement the method of the foregoing electronic device, and the processor 401 in the data processing apparatus 40 is configured to perform the following operations:
obtaining a first description text in a first description language, where the first description text represents a first element of an intelligent terminal in a first scenario;
obtaining a second description text in a second description language, where the second description text represents the first element, and a description name and a parameter type of the first element represented by the first description text are the same as a description name and a parameter type of the first element represented by the second description text; and
executing the first description text and the second description text.

In a possible implementation, the first element belongs to a predefined first element library.

Obtaining the first description text in the first description language includes:
obtaining the first description text based on the first scenario and the first element library.

In a possible implementation, the first element belongs to a predefined second element library.

Obtaining the second description text in the second description language includes:
obtaining the second description text based on the first scenario and the second element library.

In a possible implementation, the description name, the parameter type, and a parameter value of the first element represented by the first description text are the same as the description name, the parameter type, and a parameter value of the first element represented by the second description text.

In a possible implementation, the first description language is different from the second description language, and the first description language or the second description language includes:
an operational design domain, ODD description language, a static scenario description language, a dynamic scenario description language, or a verification and evaluation description language.

In a possible implementation, the ODD description language describes one or more of the following elements: a road-type element, an environment-type element, and a vehicle status-type element; or
the static scenario description language describes one or more of the following elements: a road-type element; or
the dynamic scenario description language describes one or more of the following elements: an environment-type element and a vehicle status-type element; or
the verification and evaluation description language describes one or more of the following elements: a road-type element, an environment-type element, and a vehicle status-type element.

In a possible implementation, the first element includes one or more elements.

In a possible implementation, the first element includes a plurality of elements, the plurality of elements are joined by a connective, and the connective includes a logical connective and/or a temporal connective.

In a possible implementation, the logical connective includes one or more of the following:
negation, conjunction, disjunction, implication, and equivalence.

In a possible implementation, the temporal connective includes one or more of the following:
until, always, and eventually.

An embodiment of this application further provides a chip system. The chip system includes a processor and a communication interface. The communication interface is configured to receive and/or send data, and/or the communication interface is configured to provide an input and/or output for the processor. The chip system is configured to implement the foregoing data processing method, for example, the method in FIG. 1.

Optionally, an embodiment of this application provides an autonomous driving simulation system. The autonomous driving simulation system may perform the method in FIG. 1, to implement a simulation test on an intelligent driving terminal (for example, a self-driving vehicle) equipped with an intelligent driving system. Optionally, the autonomous driving simulation system may be deployed in a server, a cloud platform, an electronic device, an upper computer, or the like. Alternatively, the autonomous driving simulation system may be deployed in a chip of an electronic device, or the like. This is not limited herein.

An embodiment of this application further provides a computer-readable storage medium. The computer-readable storage medium stores instructions. When the instructions are run on at least one processor, the foregoing data processing method is implemented, for example, the method in FIG. 1.

An embodiment of this application further provides a computer program product. The computer program product includes computer instructions, and when the computer instructions are executed by a computing device, the foregoing data processing method is implemented, for example, the method in FIG. 1.

In embodiments of this application, the word like "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In embodiments of this application, "at least one" means one or more, and "a plurality of" means two or more. "At least one of the following items (pieces)" or a similar expression thereof means any combination of these items, including any combination of a single item (piece) or plural items (pieces). For example, at least one of a, b, or c may indicate: a, b, c, (a and b), (a and c), (b and c), or (a, b, and c), where a, b, and c may be singular or plural. The term "and/or" describes an association between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects.

In addition, unless otherwise stated, ordinal numbers such as "first" and "second" in embodiments of this application are for differentiation between a plurality of objects, but are not intended to limit a sequence, a time sequence, priorities, or a degree of importance of the plurality of objects. For example, a first device and a second device are merely for ease of description, and do not indicate a difference of the first device and the second device in terms of a structure and a degree of importance. In some embodiments, the first device and the second device may alternatively be the same device.

According to the context, the term "when" used in the foregoing embodiments may be interpreted as "if', "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

## Claims

1. A data processing method, comprising:
obtaining a first description text in a first description language, wherein the first description text represents a first element of an intelligent terminal in a first scenario;
obtaining a second description text in a second description language, wherein the second description text represents the first element, and a description name and a parameter type of the first element represented by the first description text are the same as a description name and a parameter type of the first element represented by the second description text; and
executing the first description text and the second description text.

2. The method according to claim 1, wherein the first element belongs to a predefined first element library; and
obtaining the first description text in the first description language comprises:
obtaining the first description text based on the first scenario and the first element library.

3. The method according to claim 1 or 2, wherein the first element belongs to a predefined second element library; and
obtaining the second description text in the second description language comprises:
obtaining the second description text based on the first scenario and the second element library.

4. The method according to any one of claims 1 to 3, wherein the description name, the parameter type, and a parameter value of the first element represented by the first description text are the same as the description name, the parameter type, and a parameter value of the first element represented by the second description text.

5. The method according to any one of claims 1 to 4, wherein the first description language is different from the second description language, and the first description language or the second description language comprises:
an operational design domain, ODD description language, a static scenario description language, a dynamic scenario description language, or a verification and evaluation description language.

6. The method according to claim 5, wherein
the ODD description language describes one or more of the following elements: a road-type element, an environment-type element, and a vehicle status-type element; or
the static scenario description language describes one or more of the following elements: a road-type element; or
the dynamic scenario description language describes one or more of the following elements: an environment-type element and a vehicle status-type element; or
the verification and evaluation description language describes one or more of the following elements: a road-type element, an environment-type element, and a vehicle status-type element.

7. The method according to any one of claims 1 to 6, wherein the first element comprises one or more elements.

8. The method according to claim 7, wherein the first element comprises a plurality of elements, the plurality of elements are joined by a connective, and the connective comprises a logical connective and/or a temporal connective.

9. The method according to claim 8, wherein the logical connective comprises one or more of the following:
negation, conjunction, disjunction, implication, and equivalence.

10. The method according to claim 8 or 9, wherein the temporal connective comprises one or more of the following:
until, always, and eventually.

11. A data processing apparatus, comprising:
an obtaining unit, configured to obtain a first description text in a first description language, wherein the first description text represents a first element of an intelligent terminal in a first scenario, wherein
the obtaining unit is configured to obtain a second description text in a second description language, wherein the second description text represents the first element, and a description name and a parameter type of the first element represented by the first description text are the same as a description name and a parameter type of the first element represented by the second description text; and
a processing unit, configured to execute the first description text and the second description text.

12. The apparatus according to claim 11, wherein the first element belongs to a predefined first element library; and
when obtaining the first description text in the first description language, the obtaining unit is configured to:
obtain the first description text based on the first scenario and the first element library.

13. The apparatus according to claim 11 or 12, wherein the first element belongs to a predefined second element library; and
when obtaining the second description text in the second description language, the obtaining unit is configured to:
obtain the second description text based on the first scenario and the second element library.

14. The apparatus according to any one of claims 11 to 13, wherein the description name, the parameter type, and a parameter value of the first element represented by the first description text are the same as the description name, the parameter type, and a parameter value of the first element represented by the second description text.

15. The apparatus according to any one of claims 11 to 14, wherein the first description language is different from the second description language, and the first description language or the second description language comprises:
an operational design domain, ODD description language, a static scenario description language, a dynamic scenario description language, or a verification and evaluation description language.

16. The apparatus according to claim 15, wherein
the ODD description language describes one or more of the following elements: a road-type element, an environment-type element, and a vehicle status-type element; or
the static scenario description language describes one or more of the following elements: a road-type element; or
the dynamic scenario description language describes one or more of the following elements: an environment-type element and a vehicle status-type element; or
the verification and evaluation description language describes one or more of the following elements: a road-type element, an environment-type element, and a vehicle status-type element.

17. The apparatus according to any one of claims 11 to 16, wherein the first element comprises one or more elements.

18. The apparatus according to claim 17, wherein the first element comprises a plurality of elements, the plurality of elements are joined by a connective, and the connective comprises a logical connective and/or a temporal connective.

19. The apparatus according to claim 18, wherein the logical connective comprises one or more of the following:
negation, conjunction, disjunction, implication, and equivalence.

20. The apparatus according to claim 18 or 19, wherein the temporal connective comprises one or more of the following:
until, always, and eventually.

21. A computer-readable storage medium, wherein the computer-readable storage medium stores a computer program, and when the computer program is executed by a processor, the method according to any one of claims 1 to 10 is implemented.
